# EUROPEAN PATENT SPECIFICATION

(11) **EP 0 825 461 B1**
(45) Date of publication and mention of the grant of the patent: **14.11.2001**
(21) Application number: 97113624.7
(22) Date of filing: 07.08.1997
(51) Int. Cl.: G02B 5/124

(54) **Reflector**
Reflektor
Réflecteur

(30) Priority: 16.08.1996 JP 21637896
(43) Date of publication of application: 25.02.1998
(73) Proprietor: Stanley Electric Co., Ltd., Meguro-ku Tokyo 153 (JP)
(72) Inventor: Kobayashi, Shigehiro, Utsunomiya-shi, Tochigi-ken (JP); Konaka, Masaki, Utsunomiya-shi, Tochigi-ken (JP)
(74) Representative: Leitner, Waldemar, Dr. techn.

(56) References cited:
- WO-A-92/04647
- DE-A- 4 410 994
- US-A- 1 848 675
- US-A- 4 080 280
- US-A- 4 189 209
- PATENT ABSTRACTS OF JAPAN vol. 096, no. 006, 28 June 1996 & JP 08 029603 A (STANLEY ELECTRIC CO LTD), 2 February 1996,

## Description

### BACKGROUND OF THE INVENTION

### 1. Field of the invention

This invention relates to a retro reflector, hereinafter in the descriptory part of this application, called reflective reflector, which is provided in a rear reflecting mirror of a vehicle or the shoulder of a road, for example, and reflects light from a headlamp of a vehicle back toward an emission direction and, more specifically, to a reflective reflector in which an extremely small deflection angle is given to reflected light to compensate for the positional difference between the headlamp and a driver.

### 2. Background Art

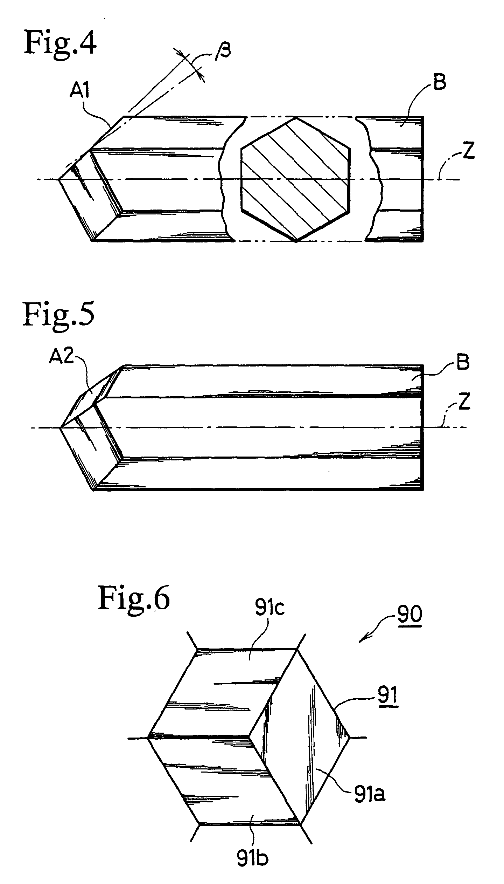

To explain the basic configuration of this type of a reflective reflector 90 first, the reflective reflector 90 is constructed by combining a plurality of reflection elements 91 which are a regular hexagon when seen from the front (incident and reflecting side) and each consist of three mirror surfaces 91 a, 91 b, 91 c. The reflection elements 91 are arranged such that two parallel sides of the regular hexagon become horizontal when the reflective reflector 90 is attached to a vehicle as shown in Fig. 6.

In an actual use state, as shown in Fig. 7, an extremely small deflection angle α is produced between a headlamp 80 and a viewpoint P of a driver. Therefore, to provide the extremely small deflection angle α to reflected light, as shown in Fig. 8, an angle γ at which the three mirror surfaces 91a, 91b, 91c face one another is made slightly larger than 90° to radiate reflected light toward six directions U, UR, DR, D, DL, UL as shown in Fig. 9 and to cause a reflected light beam U of a right up direction to reach the driver, thereby compensating for the positional difference between the headlamp and the driver.

When the reflector is configured such as described above, only the reflected light beam U in the right up direction reaches the driver, and all the reflected light beams other than the above reflected light beam U do not reach the driver and become unavailable, thereby reducing the efficiency of the reflective reflector 90 to 1/6 the initial efficiency. To compensate for this reduction, it is necessary to increase the size of the reflective reflector 90.

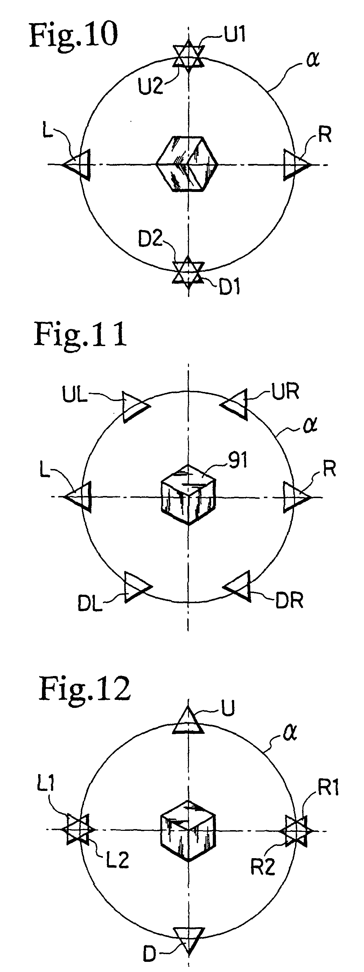

In view of this, a reflective reflector shown in Laid-open Japanese Patent Application No. Hei 8-29603 applied by the same applicant as the present invention is remodelled into a reflective reflector in which an inclination angle is given only to a mirror surface having an axis parallel to a direction for giving an extremely small deflection angle to reflected light so that reflected light beams U1 and U2 can reach a right up direction as shown in Fig. 10, thereby obtaining a double efficiency that of the prior art described above.

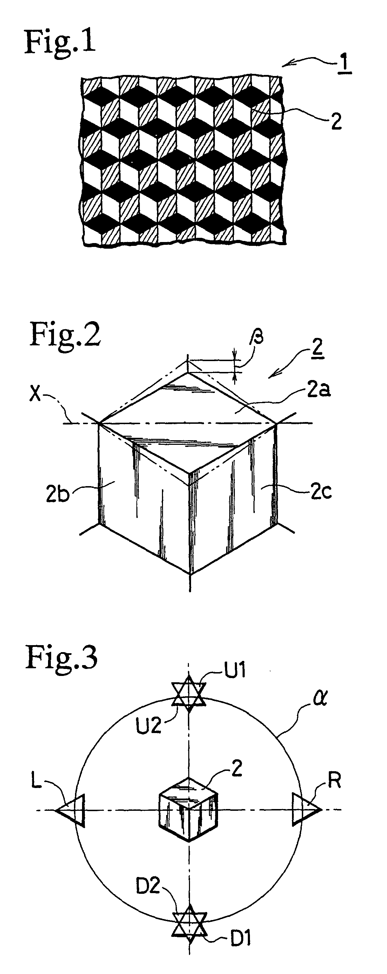

However, in the conventional reflective reflector described above, a straight line connecting the apex angles of the regular hexagonal refection element 91 is required to be perpendicular (see Fig. 1) from a design aspect of a vehicle, for example, when the reflector is installed on the vehicle. That is, the reflection element 91 is required to be rotated at 90° from a state shown in Fig. 6 in some cases.

In this case, in a reflective reflector in which the angle γ at which the three mirror surfaces 91a to 91c face one another is made slightly larger than 90°, light is reflected toward six directions UR, R, DR, DL, L, UL as shown in Fig. 11, there is light reflected toward a right up direction and reaching the eyes of the driver, and as a result, the reflective reflector loses its function.

In the reflective reflector disclosed in Laid-open Japanese Patent Application No. Hei 8-29603, as the reflection element 91 is rotated at 90°, reflected light is also rotated at 90° as shown in Fig. 12, and only a reflected light beam U reaches the driver, thereby reducing the efficiency to 1/6. As a result, an efficiency improvement of interest cannot be obtained and solutions to these problems are awaited.

In the reflective reflector disclosed in Laid-open Japanese Patent Application No. Hei 8-29603, when a mold for the reflection element 91 is to be formed, for example, a cutter for cutting must be inclined two-dimensionally to set an inclination angle to be provided to one mirror surface, whereby the process becomes complicated and it is difficult to maintain machining accuracy.

### SUMMARY OF THE INVENTION

As means for solving the above problems, the present invention provides a retro reflector comprising a plurality of reflection elements, each having three mirror surfaces, two of them being arranged at a right angle to each other, the third one having an orientation with respect to the other two ones which results from a small rotation, by a predetermined angle, relative to the plane perpendicular to the other two mirror surfaces, around an axis on the third mirror surface, which axis is seen from the incident side as perpendicular to the line defined by the intersection of the two mirror surfaces, whereby the rotation of the third mirror surface is responsible of a controlled small deflection angle.

### BRIEF DESCRIPTION OF THE DRAWINGS

These objects and advantages of the present invention will become clear from the following description with reference to the accompanying drawings, wherein:
Fig. 1 is a front view of a reflective reflector according to an embodiment of the present invention;
Fig. 2 is an enlarged front view of key parts of the above embodiment;
Fig. 3 is a diagram for explaining the operation of the above embodiment;
Fig. 4 is a diagram for explaining the production process of a mold of the above embodiment;
Fig. 5 is a diagram for explaining the production process of a mold of the prior art;
Fig. 6 is a diagram for explaining the arrangement of reflection elements of the prior art;

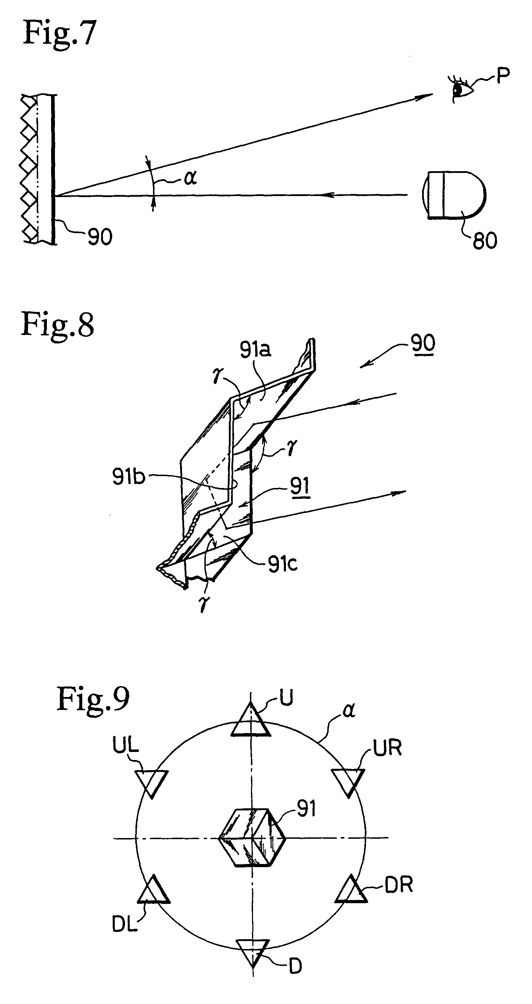

Fig. 7 is a diagram for explaining the use condition of a reflective reflector;
Fig. 8 is a diagram of the prior art;
Fig. 9 is a diagram for explaining the function of the prior art;
Fig. 10 is a diagram for explaining the function of another prior art;
Fig. 11 is a diagram showing reflected light when the reflective reflector of the prior art is rotated at 90°; and
Fig. 12 is a diagram showing reflected light when the reflective reflector of another prior art is rotated at 90°.

### DETAILED DESCRIPTION OF THE PREFERRED EMBODIMENTS

The present invention is described in detail with reference to a preferred embodiment shown in the accompanying drawings. Denoted by 1 in Fig.1 is a reflective reflector according to the present invention. Like the reflective reflector of the prior art, this reflective reflector 1 is constructed by a plurality of reflection elements 2, each of which consists of three mirror surfaces 2a, 2b, 2c which are basically perpendicular to one another as shown in an enlarged view of Fig. 2.

To compensate for an angular difference produced between a headlamp and a viewpoint of a driver, an extremely small deflection angle α is also given to reflected light in the present invention (see Fig. 7 of the prior art). However, in the present invention, the extremely small deflection angle α is given only to a specific one mirror surface which satisfies predetermined conditions.

A detailed description is subsequently given of the constitution of the present invention. The following description is based on the condition that the extremely small deflection angle α is set in an up vertical direction. The first step of carrying out the present invention is to select a mirror surface to be given the extremely small deflection angle α, a mirror surface in which the direction of the extremely small deflection angle α, that is, an axis X perpendicular to a normal, can be set within the plane as a diagonal.

At this point, when the three mirror surfaces 2a, 2b, 2c are arranged as shown in Fig. 2, it is only the mirror surface 2a which enables the axis X, that is, a horizontal line, to be set within the plane as a diagonal. On the other hand, since tangents with a horizontal line do not agree with a diagonal, the other two mirror surfaces 2b, 2c are not involved in the generation of the extremely small deflection angle α and are arranged at a right angle based on the basic constitution described above.

An inclination angle β having the same value as the extremely small deflection angle α is given to the mirror surface 2a selected according to the above condition in a direction perpendicular to the axis X. When the inclination angle β is to be given to the mirror surface 2a, the mirror surface 2a may be rotated at the inclination angle β from the reference position with the axis X as a rotary axis.

With the above constitution, in the reflecting element 2 of the reflective reflector 1 of the present invention, six reflected light beams having the extremely small deflection angle α are obtained as shown in Fig. 3. Since only one mirror surface is given the inclination angle β in the present invention, directions in which reflected light is produced are up and down vertical directions and right and left horizontal directions, making a total of four.

At this point, there are reflected light beams U1 and U2 in an up vertical direction, reflected light beams D1 and D2 in a down vertical direction, and reflected light beams L and R in a horizontal direction, making a total of six reflection light beams.

Since the light quantities of reflected light beams U1 to R are the same and reflected light beams U1 and U2 are present in an up vertical direction which is a position for compensating for the extremely small deflection angle α generated between the headlamp and the viewpoint of the driver, a double light quantity can be obtained in that direction.

Figs. 4 and 5 show the structures of molds for forming reflection elements in the present invention and Laid-open Japanese Patent Application No. Hei 8-29603 as the prior art. Both molds are the same in that only one mirror surface is given an inclination angle, but differ in direction for giving the inclination angle.

That is, in the present invention, when a mold for a single reflection element is formed by chamfering an end of a regular hexagonal rod member B to form a trigonal pyramid, an inclination angle β is given to one surface A1 in a direction parallel to the central axis Z of the regular hexagonal rod member B as shown in Fig. 4. On the other hand, in the prior art, the inclination angle is given to one surface A2 in a direction perpendicular to the central axis Z of the rod member B as shown in Fig. 5.

This means that, in the constitution of the present invention, when one surface given the inclination angle β of the rod member B is to be machined, one-dimensional compensation corresponding to the inclination angle β may be carried out in addition to a state where the other two surfaces are machined. On the other hand, it means that, in the constitution of the prior art, two-dimensional compensation must be carried out, whereby the machining process becomes complicated and machining accuracy is lowered as described above.

Therefore, in the reflective reflector 1, when the arrangement of the reflection element 2 is not specified, it is arranged such that a straight line connecting two opposite apex angles of a regular hexagon becomes perpendicular when it is installed and only a mirror surface having an axis perpendicular to a direction for giving the extremely small deflection angle α to reflected light as a diagonal is given an inclination angle β, thereby making it possible to facilitate the production of a mold and improve accuracy.

As described above, according to the present invention, a reflective reflector is configured such that a reflecting element is arranged such that a straight line connecting two opposite apex angles of a regular hexagon becomes perpendicular when it is installed and only a mirror surface having an axis perpendicular to a direction for giving an extremely small deflection angle to reflected light as a diagonal is given an inclination angle perpendicular to the axis. Therefore, even when it is requested from a vehicle side that the reflection element should be arranged such that a straight line connecting two opposite apex angles of a regular hexagon becomes perpendicular when it is installed, the prevent invention makes it possible to provide a reflective reflector having double reflection efficiency that of a reflective reflector of the prior art and has an extremely excellent effect of improving performance.

When there are no restrictions on the arrangement of the reflection element, the reflection element is arranged such that a straight line connecting two opposite apex angles of a regular hexagon becomes perpendicular and thereby an inclination angle to be given to a mold for forming the reflection element is set one-dimensionally, thereby making it easy to produce the mold and improve accuracy. Therefore, the present invention has an excellent effect of improving the performance and productivity of this type of a reflective reflector.

## Claims

1. A retro reflector (1) comprising a plurality of reflection elements (2), each having three mirror surfaces (2a, 2b, 2c), two (2b, 2c) of them being arranged at a right angle to each other, the third one (2a) having an orientation with respect to the other two ones (2b, 2c) which results from a small rotation, by a predetermined angle (β), relative to the plane perpendicular to the other two mirror surfaces (2b, 2c), around an axis (X) on the third mirror surface (2a), which axis (X) is seen from the incident side as perpendicular to the line defined by the intersection of the two mirror surfaces (2b, 2c), whereby the rotation of the third mirror surface (2a) is responsible of a controlled small deflection angle (α).

## Patentansprüche

1. Rückstrahler (1) mit einer Vielzahl von Reflexionselementen (2), wobei jedes jeweils drei Spiegeloberflächen (2a, 2b, 2c) aufweist, von denen zwei (2b, 2c) rechtwinkelig zueinander angeordnet sind und die dritte (2a) eine Ausrichtung bezüglich der anderen zwei (2b, 2c) aufweist, welche durch eine geringe Drehung um einen vorausbestimmten Winkel (β) bezüglich der Ebene, die orthogonal zu den anderen beiden Spiegeloberflächen (2b, 2c) ist, um eine Achse (X) auf der dritten Spiegeloberfläche (2a) erhalten wird, wobei die Achse (X) von der Einfallsseite als orthogonal zu der Linie sichtbar ist, die durch den Schnitt der beiden Spiegeloberflächen (2b, 2c) festgelegt wird, wobei die Drehung der dritten Spiegeloberfläche (2a) für einen bestimmten kleinen Ablenkungswinkel (α) verantwortlich ist.

## Revendications

1. Catadioptre (1) comprenant un pluralité d'éléments réfléchissants (2), chacun ayant trois surfaces de miroir (2a, 2b, 2c), deux (2b, 2c) d'entre elles étant disposées à angle droit l'une par rapport à l'autre, la troisième (2a) ayant une orientation par rapport aux deux autres (2b, 2c) qui résulte d'une petite rotation, d'un angle prédéterminé (β), par rapport au plan perpendiculaire aux deux autres surfaces de miroir (2b, 2c), autour d'un axe (X) sur la troisième surface de miroir (2a), cet axe (X) étant vu depuis la face d'incidence comme étant perpendiculaire à la droite définie par l'intersection des deux surfaces de miroir (2b, 2c), grâce à quoi la rotation de la troisième surface de miroir (2a) produit un petit angle (α) de déviation contrôlée.
